# EUROPEAN PATENT APPLICATION

(11) **EP 1 251 512 A2**
(43) Date of publication of application: **23.10.2002**
(21) Application number: 02252758.4
(22) Date of filing: 18.04.2002
(51) Int. Cl.: G11B 23/03

(54) **Disk cartridge with dust collection**

(30) Priority: 20.04.2001 US 839344
(71) Applicant: Plasmon LMS, Inc., Colorado Springs, CO 80907 (US)
(72) Inventor: Warmenhoven, Coen J., Colorado Springs, CO 80907 (US)
(74) Representative: Fenlon, Christine Lesley

(57) **Abstract**

The present invention relates to a disk cartridge with dust collection capability, which includes a cartridge shell (185) with a door assembly (150). Inside the disk cartridge is an optical, magnetic, or other type of disk which rotates and can be read from, or written onto, by the access device. The cartridge shell (185) is manufactured with interior recessed areas (160) into which a dust collection element (165) can be placed. In some embodiments, the recessed areas (160) are positioned so that the surface of the disk moves proximately to the recessed areas (160) as the disk rotates. In other embodiments, the recessed areas (160) are positioned near a corner (or other region) of the cartridge shell (185). The dust collection element (165) can be double-sided sticky tape, grease, electrostatic material, or other composition which can attract and retain airborne dust particles.

## Description

The present invention relates to disks for disk drives, and more particularly to a system for minimizing contamination of such disks.

Since the launch in 1982 of the audio CD, optical disks have become a very popular storage media due to their durability, random access features, and data capacity. However, portions of an optical disk can become unreadable when the disk is scratched or becomes dirty. To minimize the disk's contact with airborne dust particles, optical disks are now often enclosed in a disk cartridge. When the disk is inserted in a disk drive, the disk cartridge's door assembly is opened so that the disk drive can access the disk itself. While the door assembly is open, dust particles can enter the disk cartridge and settle on the disk, causing problems.

The computerization of businesses has steadily increased the amount of data that is processed. As more data is processed, the amount of data which must be stored increases as well. To meet the need of this ever increasing amount of data, cost-effective data storage is desired. Optical recording is especially attractive due to the high capacities that can be achieved on a single removable disk. However, to remain competitive and to meet the needs for storage, increasing the disk capacity is a paramount development goal for optical drive products. (P. Asthana, B. I. Finkelstein, and A. A. Fennema, "Rewritable optical disk drive technology," IBM Journal of Research and Development, Vol. 40, No. 5 (1996))

A previously-proposed method of increasing an optical disk's capacity involves using a stronger object lens. However, a stronger lens must be placed closer to the optical media. Dust becomes a more pressing problem in these situations.

Accordingly, it is desirable to provide an improved disk cartridge with a dust collection component which would decrease the amount of dust which settles on the disk after entering the cartridge. By reducing dust, the performance of the disk would be improved.

According to an embodiment of the present invention, there is provided a disk cartridge, with dust collection capabilities, which includes a cartridge shell with a door assembly. Inside a disk cartridge embodying the present invention, there is an optical, magnetic, or other type of disk which rotates. While rotating, an access device can read from, or write onto, the disk. The cartridge shell is manufactured with interior recessed areas into which a dust collection element can be placed. In some embodiments of the present invention, the recessed areas are positioned so that the surface of the disk moves proximately to the recessed areas as the disk rotates. In other embodiments of the present invention, the recessed areas are positioned near one or more corners of the interior of the cartridge shell. As the disk rotates, air flow is created within a disk cartridge embodying the present invention. This airflow causes movement of the dust particles, which are collected by the dust collection element. The dust collection element can be double-sided sticky tape, grease, electrostatic material, or other composition, in an embodiment of the present invention.
Reference will now be made, by way of example, to the accompanying drawings, in which:

Figure 1 is a simplified side view of a previously-proposed disk and previously-proposed access device, where the disk has a relatively thick substrate;

Figure 2 is a simplified side view of an example of a future generation disk and access device, where the disk has a relatively thin cover layer;

Figure 3 is a top view of a disk cartridge embodying the present invention with a door assembly;

Figure 4 is a top perspective view of a lower half of a disk cartridge embodying the present invention, showing a series of recessed areas;

Figure 5 provides a cross-sectional view of a disk in a disk cartridge embodying the present invention; and

Figure 6 is a top view of a lower half of a disk cartridge embodying the present invention, showing a recessed area near the corner of such a cartridge.

The present invention relates to a disk cartridge with dust collection capability. Throughout the drawings, an attempt has been made to label corresponding elements with the same reference numbers. The reference numbers include:

| **Reference Number** | **Description** |
|---|---|
| 105 | disk |
| 110 | active layer |
| 115 | substrate |
| 120 | lens |
| 125 | beam |
| 130 | laser spot |
| 135 | dust particle |
| 140 | cover layer |
| 145 | disk cartridge |
| 150 | door assembly |
| 160 | recessed area |
| 165 | dust collection element |
| 170 | cartridge shell |
| 175 | hub |
| 180 | upper half of cartridge shell |
| 185 | lower half of cartridge shell |

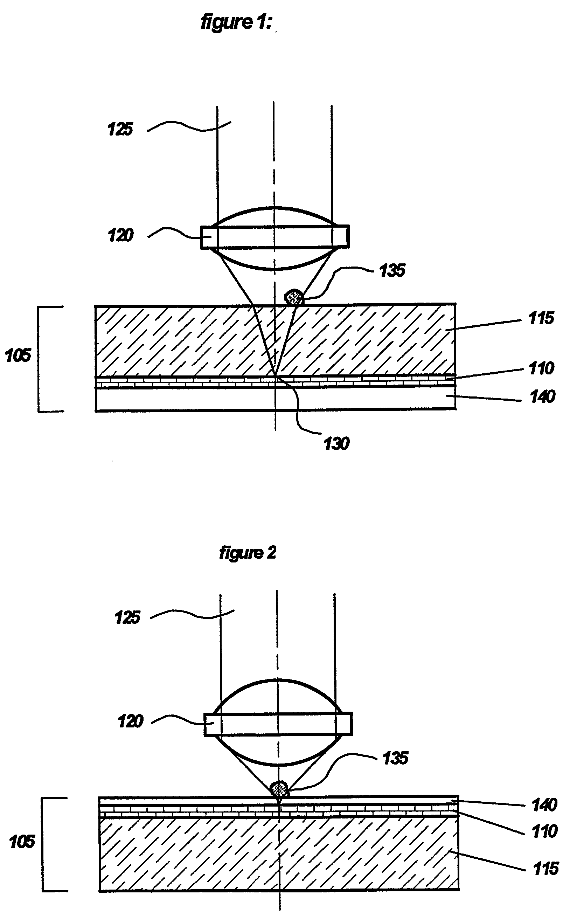

Referring to the drawings, Figures 1 and 2 illustrate the problems created by dust within a disk system. Specifically, Figure 1 shows a cut-away side view of a previously-proposed disk 105, having a substrate 115, an active layer 110 and a cover layer 140. In Figure 1, the substrate is on top, as commonly used in today's CD and DVD products.

The disk 105 can be any type of optical disk, such as an audio CD, a CD-ROM, DVD, DVD-ROM, DVD-RAM, DVD-RW, MO, or a WORM disk. The substrate 115 is commonly a polycarbonate plastic. In the optical disk industry, the plastic portion of the substrate 115 can be "pre-recorded" by being stamped with millions of pits corresponding to the binary representation of the data or information stored on the disk. This could include computer data, audio tracks, digitalized video, etc. If not "pre-recorded," the optical disk can be later written onto with a laser writing head.

A thin layer of aluminum or other material is applied, coating the plastic substrate 115 and forming the active layer 110. Then a lacquer (or similar material) is applied as the cover layer 140, which offers protection to the active layer 110. Usually the substrate 115 is relatively thick, for example it is 1.2 mm for CD and MO-type of disks, and 0.6 mm for DVD-type of disks.

The substrate 115, active layer 110 and cover layer 140 can be made of other substances. In the CD-ROM and WORM industries, the substrate 115 can also be formed from PMMA or glass; the active layer 110 can be organic die instead of aluminum; and the cover layer 140 can be UV curing lacquer as from D.S.M. or Dai Nippon, for example.

The disk 105 is often enclosed in a cartridge which protects it. The disk 105 is inserted into a disk drive, which has a drive motor and an access device. The drive motor rotates the disk 105 and the access device is positionable with respect to the rotating disk. The access device includes components which direct a laser, or other light beam 125, through a prism/lens assembly 120 to create a focused laser spot 130 on the disk 105 in order to write onto, or read from, the disk 105.

Dust can accumulate on the disk 105. As explained below, this dust can have various effects on the disk system. Figure 1 shows a dust particle 135 on the substrate 115 of the disk 105. In Figure 1, the dust particle 135 blocks only a small portion of the focused laser beam and so the laser spot 130 is not completely affected.

As the computer industry grows there is a continuous need for increased data storage capacity. One way to achieve increased storage capacity on a disk 105 is to reduce the size of the laser spot 130 on the active layer 110. This can be accomplished by using a stronger lens 120. However, a stronger lens 120 needs to be closer to the active layer 110, requiring that the cover layer 115 be thinner. For example, a DVD may have a cover layer of only 0.6 mm.

In the future, cover layers may even be just 0.1 mm. Figure 2 shows a possible example of a future standard of a DVR disk 105 with a thinner cover layer 115. Because future applications might have cover layers as thin as 0.1 mm, probably the substrate and the cover will be switched, as shown in Figure 2.

With the thinner cover layer 140, dust particles 135 are more problematic because a dust particle 135 will interfere with a greater percentage of the focused laser beam 125. If enough of the laser beam 125 is hindered, the portion of the disk 105 beneath the dust particle 135 will not be accessible.

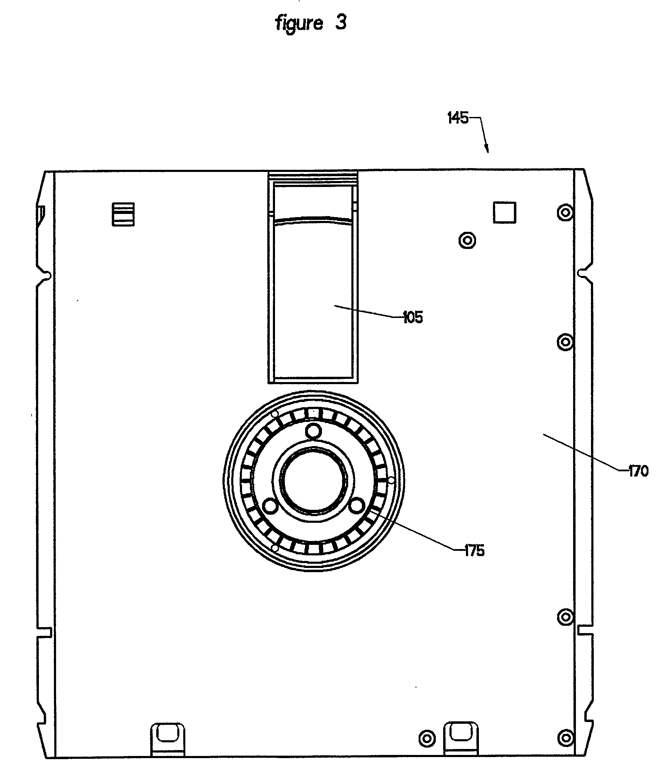

Because dust and debris affect disks, disks are usually used in a cartridge. Figure 3 shows a disk 105 in a disk cartridge 145 embodying the present invention. A disk cartridge 145 embodying the present invention includes a door assembly 150 (not shown) on a cartridge shell 170, which is open in Figure 3. A disk cartridge 145 embodying the present invention also includes a hub 175 which allows the disk drive to spin the disk 105. A disk cartridge 145 embodying the present invention may be created by joining an upper half of a cartridge shell 180 to a lower half of a cartridge shell 185.

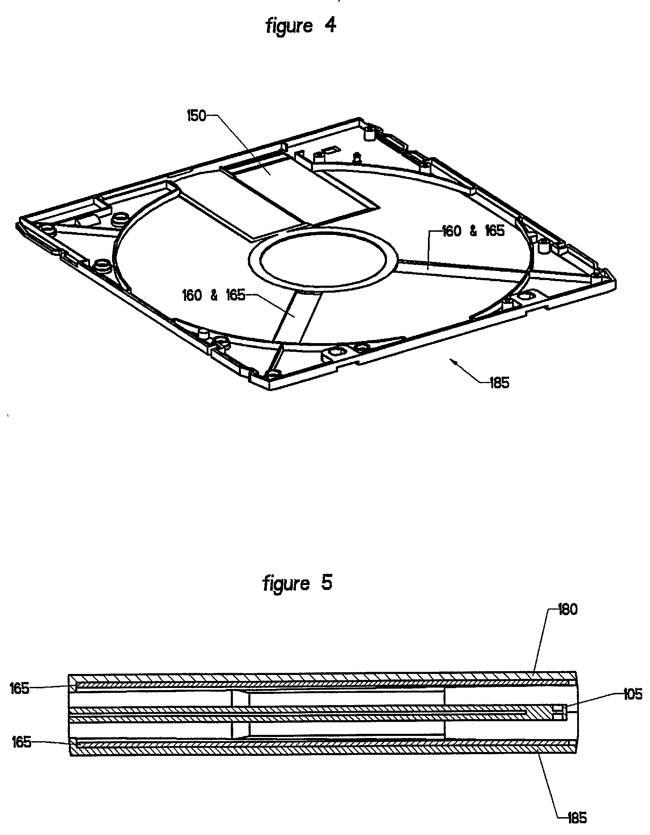

Figure 4 shows one such lower half of a disk cartridge shell 185. The door assembly 150 allows a door to be opened and closed. In the present embodiment, two recessed areas 160 have been created in the lower half of a disk cartridge shell 185. These recessed areas 160 are positioned so that the surface of the disk 105 (not shown) moves proximately to the recessed areas 160 as the disk 105 rotates. As the disk 105 rotates, air in the disk cartridge 145 moves through the interior of the cartridge shell 170. The whirling air causes dust particles which have entered the disk cartridge 145, via the door assembly 150, to become airborne.

In a disk cartridge embodying the present invention, a dust collection element 165 is placed in the recessed areas 160. As dust particles whirl around in the air within the disk cartridge 145, the dust collection element 165 attracts and retains the dust particles so that the dust particles do not settle on the disk 105. The dust collection element 165 can be double-sided sticky tape, grease, or another substance with the proper adhesive or electrostatic qualities. The chemical composition of the dust collection element 165 should be thick enough so that it does not get displaced within, or flow out of, the cartridge, regardless of the cartridge's orientation or of environmental conditions such as high temperature, humidity or vibrations. Preferably, the dust collection element 165 should retain its ability to collect and retain dust over time. It should remain actively adhesive for several years, ideally for the expected life of the disk 105 and/or cartridge 145.

Figure 5 shows a cutaway side view of the disk 105, recessed areas 160 and dust collection element 165 within the disk cartridge 145. As can be seen in Figure 5, the dust collection element 165 can be placed closely above and below the disk 105. This positioning, in conjunction with the previously mentioned airflow, optimizes the collection of dust and keeps the disk surface relatively dust free.

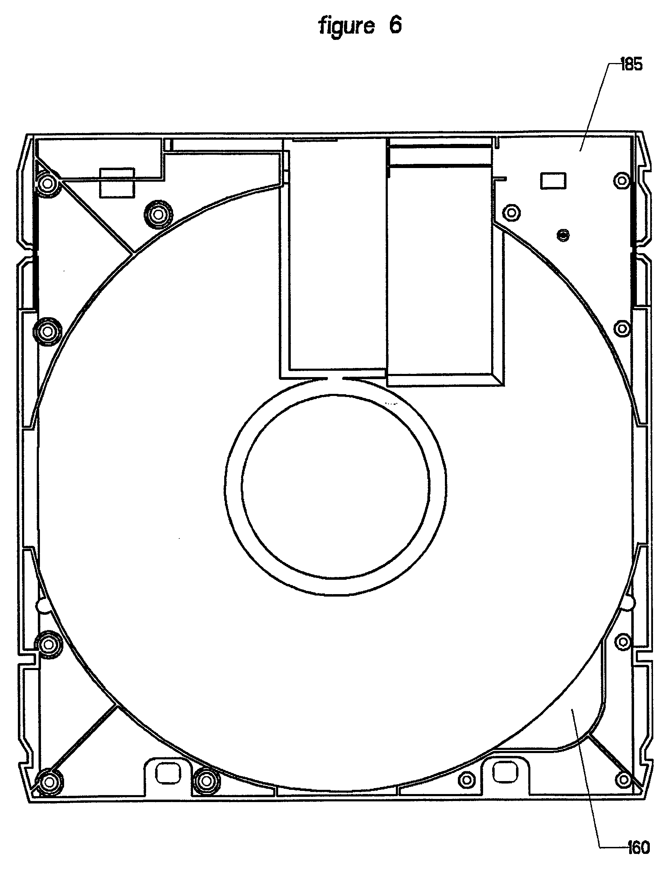

Figure 6 shows another embodiment of the present invention. In Figure 6, a lower half of a disk cartridge shell 185 is shown. However, in Figure 6, a recessed area 160 is formed near a corner of the cartridge shell, into which the dust collection element 165 can be placed. Of course, one skilled in the art could create embodiments in which there are differing positions, sizes, and numbers of recessed areas 160 and dust collection elements 165.

Although a CD or other optical disk has been so far described, the use of recessed areas 160 holding dust collection element 165 is also applicable to other disk types. For example, the disk 105 can also be a magnetic floppy diskette, such as the common 3.5 inch diskette used with personal computers.

From the foregoing detailed description, it will be evident that there are a number of changes, adaptations and modifications of the present invention which come within the province of those skilled in the art.

## Claims

1. A disk cartridge for protecting a disk, comprising:
a cartridge shell having an exterior surface and an interior surface, the interior surface having a recessed area;
a door assembly on the cartridge shell for allowing a disk to be accessed by an access device; and
dust collection element positioned in the recessed area of the cartridge shell, for collecting airborne dust.

2. A storage disk, comprising:
a disk for storing data;
a disk cartridge which encapsulates and protects the disk, the disk cartridge comprising a cartridge shell having an exterior surface and an interior surface, the interior surface having a recessed area; and
dust collection element positioned in the recessed area, for collecting dust particles so as to keep dust off of the disk.

3. The disk cartridge of claim 1, or the storage disk of claim 2, wherein the dust collection element is double-sided tape.

4. The disk cartridge of claim 1, or the storage disk of claim 2, wherein the dust collection element is grease.

5. The disk cartridge of claim 1, 3 or 4, or the storage disk of claim 2, 3 or 4, wherein the recessed area of the cartridge shell is positioned so that the surface of the disk moves proximately to the recessed area as the disk rotates.

6. The disk cartridge of claim 1, 3 or 4, or the storage disk of claim 2, 3 or 4, wherein the recessed area is positioned near a corner of the cartridge shell.

7. The disk cartridge of claim 1, 5 or 6, or the storage disk of claim 2, 5 or 6, wherein the dust collection element is material with electrostatic properties for attracting dust.

8. The disk cartridge of claim 1, 5 or 6, or the storage disk of claim 2, 5 or 6, wherein the dust collection element is a sticky material with that retains such sticky property for more than one year.

9. The disk cartridge of claim 1, 5 or 6, or the storage disk of claim 2, 5 or 6, wherein the dust collection element has a chemical composition with a viscous consistency so that the dust collection element remains placed within the recessed area.
